# EUROPEAN PATENT SPECIFICATION

(11) **EP 1 928 043 B1**
(45) Date of publication and mention of the grant of the patent: **28.04.2010**
(21) Application number: 07121766.5
(22) Date of filing: 28.11.2007
(51) Int. Cl.: H01M 2/16

(54) **Lithium rechargeable battery and separator for the same**
Wiederaufladbare Lithiumbatterie und Separator dafür
Batterie rechargeable au lithium et séparateur pour celle-ci

(30) Priority: 30.11.2006 KR 20060120207
(43) Date of publication of application: 04.06.2008
(73) Proprietor: Samsung SDI Co., Ltd., Gyeonggi-do (KR)
(72) Inventor: Kim, Jaewoong Samsung SDI Co., Ltd., Yongin-si Gyeonggi-do (KR); Kim, Chanjung Samsung SDI Co., Ltd., Yongin-si Gyeonggi-do (KR); Son, Sukjung Samsung SDI Co., Ltd., Yongin-si Gyeonggi-do (KR); Jo, Yunkyung Samsung SDI Co., Ltd., Yongin-si Gyeonggi-do (KR)
(74) Representative: Walaski, Jan Filip

(56) References cited:
- EP-A- 1 085 589
- EP-A- 1 097 961
- EP-A- 1 667 253

## Description

The present invention relates to a lithium rechargeable battery and a separator thereof, more particularly, to a separator, of which a shrinkage rate of horizontal direction against vertical direction is approximately equal to or less than 1 and the maximum thermal shrinkage of vertical direction and horizontal direction is less than 30%, and a lithium rechargeable battery employing the separator.

Recently, portable electronic devices including PDAs, cell phones, notebook computers, digital cameras are widely used, and the portable electronic devices are getting smaller and lighter in order to let users carry them more conveniently.

Accordingly, there is a growing interest in batteries which can be used as power sources for those portable electronic devices. Lots of research on lithium rechargeable batteries is in progress because among rechargeable secondary batteries, the lithium rechargeable battery has a higher energy density and a lower discharge rate than conventional lead battery and nickel-cadmium battery.

The lithium rechargeable battery includes a positive electrode, a negative electrode, a separator interposed between the positive electrode and the negative electrode, and a liquid electrolyte or a solid electrolyte which provides a lithium-ion path between the positive electrode and the negative electrode.

Although the lithium rechargeable battery is safer than the conventional batteries using metal lithium, the main materials of the lithium-ion rechargeable battery are either combustible or volatile, thus an explosion or a fire might happen when the temperature of the lithium rechargeable battery increases.

The temperature of the lithium rechargeable battery can dramatically increase, when an abnormal current flows due to a short-circuit of an external circuit and when the battery is overcharged because of a malfunction of a charger. A PTC (Positive Temperature Coefficient) element which can stop a current from flowing at or above a predetermined temperature can be mounted in the battery to prevent a sudden temperature increase of the battery because of an overcurrent. When the battery's temperature increases to a point close to the melting point of the separator, a shutdown feature wherein holes in a separator layer are closed, can be provided to prevent the temperature increase because of the abnormal overcurrent flow in the battery.

However, the phenomenon of temperature increase can also be caused overcurrent flowing in an external circuit of the battery and can be suddenly caused by an electrical contact between the positive electrode and the negative electrode inside the battery thereby being short-circuit inside the battery. In this case, the thermal stability cannot be obtained by the shutdown feature of PTC and separator, when battery temperature is suddenly increased by a short-circuit inside battery.

A short-circuit inside the battery may occur when an external mechanical impact is applied to the battery, and when dendrite penetrates through the separator. Several methods of improving the mechanical strength of the separator have been suggested to prevent these short-circuits inside the battery. The methods of improving the mechanical strength of the separator includes a method of using a high molecular weight polymer material, a method of thickening the separator film, and a method of raising elongation. Among these methods, the method of raising elongation is mainly used. However, the problem of a separator of high elongation is that it tends to contract.

External impact and dendrite formation are not the only reasons for the short-circuit inside the battery. When the separator interposed between the negative electrode and the positive electrode contracts, the negative electrode contacts the positive electrode thereby causing a short-circuit. In this case, the negative electrode and the positive electrode are pyrolyzed and continue to thermal runaway, which may cause the battery to explode or catch fire.

Portable electronic devices are often exposed to high temperature such as inside a car and near to a window. Because the temperature inside a car is sometimes over 80°C in summer, it is important to select an improved separator for the battery having a higher thermal stability.

The problem presented above can be solved by employing a separator whose material does not undergo thermal shrinkage. However, it is not easy to obtain a polymer material which belongs to the polyolefin group and does not undergo thermal shrinkage. In addition, polymer materials that do not undergo thermal shrinkagedo not have other properties that are required for being a separator. Therefore, it is difficult to provide a separator using materials that do not undergo thermal shrinkage.

It is, therefore, an object of the present invention to provide an improved secondary battery with an improved thermal stability to eliminate the problem of conventional batteries. It is another object of the present invention to provide a separator which can raise thermal stability of battery, and the lithium rechargeable battery employing the separator.

EP 1667253 and EP 1097961 disclose porous films capable of being used as battery separators.

According to the invention, there is provided a separator for a lithium rechargeable battery according to claim 1.

The problem of thermal stability of the conventional lithium rechargeable batteries can be solved when the separator's shrinkage rate is within a predetermined range during contracting.

To overcome the problem discussed above, the separator of the present invention has the maximum thermal shrinkage of vertical direction and horizontal direction within a predetermined range - equal to or less than 30%. The lithium battery employing the separator whose ratio of maximum thermal shrinkage of horizontal direction against vertical direction is 0.8 to 1.3 represents an improved thermal stability.

The maximum thermal shrinkage in the present invention denotes the value which the maximum contracted length of separator is divided by the original length of a specimen. TMA (ThermoMechanical Analyzer) measures the change of the length and the maximum length of the separator, according to temperature increase.

A rectangular specimen was employed to measure the separator shrinkage. The rectangular specimen was a polyethylene sheet of thickness 16 µm, width 10mm, length 30mm, and was fixed to the jig of TMA in the length direction of the specimen. The gap between the jigs was set 10mm and 100gf force was applied to pull both ends of the specimen in two opposite directions. After placing the specimen fixed to the jig into a temperature chamber, a tester measured the contracted length by increasing the temperature of the temperature chamber from room temperature to 160°C by a rate of 10°C per minute. The results were obtained by measuring the length change of the specimen according to the change of temperature, and calculating the shrinkage by dividing the contracted length by the length of the original specimen.

The maximum thermal shrinkage values of the vertical direction and the horizontal direction of the separator were obtained by using TMA. Here, the vertical direction means axial direction of a jelly roll type electrode assembly of a battery and the horizontal direction means the rotational direction of the jelly roll type electrode assembly.

The before procedure of the thermal stability test is charging the battery 100% and putting it into the oven, then increasing temperature from room temperature to 150°C with a rate of 5°C per minute, and lastly measuring the time required for the battery to catch fire or explode by maintaining the temperature at 150°C. The more the time required for the battery to catch fire or explode, the more excellent the thermal stability of the battery is.

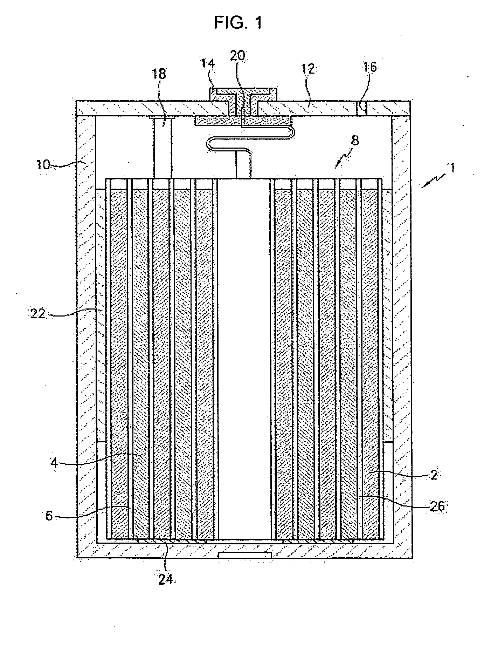

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein FIG. 1 shows a sectional view of a rechargeable battery according to an embodiment of the present invention.

The present invention now will be described more detailed hereinafter with reference to the accompanying drawing, in which exemplary embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those having skill in the art.

An exemplary embodiment of a non-aqueous lithium rechargeable battery 1 structure is illustrated in FIG. 1. A positive electrode 2 and a negative electrode 4 are formed by materials which allow for extraction/insertion of lithium, a separator 6 is interposed between the positive electrode 2 and negative electrode 4, and an electrode assembly 8 is formed by winding and put it in a case 10. The top of the battery is sealed by a cap plate 12 and a gasket 14. A safety valve and an electrolyte injection hole 16 can be formed on the cap plate 12 to prevent an overpressure of a battery. Before sealing the battery, an electrolyte 26 is injected into an electrolyte injection hole 16. Injected electrolyte 26 is impregnated into separator 6 and electrolyte injection hole 16 is sealed by a sealing agent.

A plurality of batteries are fabricated by using the following well known methods in general.

94g of a lithium cobalt oxide (LiCoO₂), 3g of a carbon black and 3g of a polyvinylidene fluoride (PVDF) are dissolved and dispersed in 80g of N-Methylpyrrolidone, then the mixture becomes a cathode active material slurry. The cathode active material slurry is spread on the top of an aluminum foil, a current collector using a spreading device, and is dried, then a positive electrode is manufactured by pressing it with a roll press.

90g of a mesocarbon micro bead (MCMB®)(Osaka Gas) and 10g of polyvinylidene fluoride are dissolved and dispersed in 80g of N-Methylpyrrolidone, and the mixture becomes an anode active material slurry. The anode active material slurry is spread on the top of a copper foil, current collector using a spreading device, and is dried, then a negative electrode is manufactured by pressing it with a roll press.

And the electrolyte was prepared, the electrode is a solvent of 1.15M concentration having LiPF₆ dissolved by lithium salts in a solvent which has a ratio of ethylene carbonate: propylene carbonate: dimethyl carbonate of 3: 4: 1.

Electrode assembly 8, wherein separator 6 is interposed between positive electrode 2 and negative electrode 4 and wound, is mounted in the inner of case 10, then electrolyte is injected into the case and electrolyte injection hole is sealed, thereby lithium-ion battery is fabricated.

Separator 6 is characterized in which the maximum thermal shrinkages of vertical direction (TD) and horizontal direction (MD) are 0 to 30%. In the separator, the ratio of maximum thermal shrinkage of the horizontal direction against the maximum thermal shrinkage of the vertical direction may be 0.8 to 1.3.

Separator 6 of the present invention has the maximum thermal shrinkage of vertical direction and horizontal direction within a predetermined range - equal to or less than 30%. The lithium battery employing the separator whose ratio of maximum thermal shrinkage of horizontal direction against vertical direction is 0.8 to 1.3 represents an improved thermal stability.

The maximum thermal shrinkage in the present invention denotes the value which the maximum contracted length of separator is divided by the original length of a specimen. TMA (ThermoMechanical Analyzer) measures the change of the length and the maximum length of the separator, according to temperature increase.

A rectangular specimen was employed to measure the separator shrinkage. The rectangular specimen was a polyethylene sheet of thickness 16µm, width 10mm, length 30mm, and was fixed to the jig of TMA in the length direction of the specimen. The gap between the jigs was set 10mm and 100gf force was applied to pull both ends of the specimen in two opposite directions. After placing the specimen fixed to the jig into a temperature chamber, a tester measured the contracted length by increasing the temperature of the temperature chamber from room temperature to 160°C by a rate of 0°C per minute. The results were obtained by measuring the length change of the specimen according to the change of temperature, and calculating the shrinkage by dividing the contracted length by the length of the original specimen.

Batteries are fabricated using various kinds of separator having different thermal shrinkage, and thermal stability tests of the batteries are done in an oven. The procedure of the thermal stability test is charging the battery 100% and putting it into the oven, then increasing temperature from room temperature to 150°C with a rate of 5°C per minute, and lastly measuring the time required for the battery to fire or explode by maintaining temperature at 150°C. The more the time required for the battery to fire or explode, the more excellent the thermal stability of the battery is.

Table 1 and 2 show thermal shrinkage characteristics of various kinds of separators according to the embodiments of the present invention and comparative embodiments, and the results of thermal stability tests of lithium rechargeable battery employing corresponding separators. Here, the vertical direction means axial direction of a jelly roll type electrode assembly of a battery and the horizontal direction means the rotational direction of the jelly roll type electrode assembly.

Separators A and D shown in Table 1 have thermal shrinkage characteristics as provided by the present invention, and separators E,F,G and H have thermal shrinkage characteristics that are out of the requested range of the present invention.

**Table 1**

| | Thermal shrinkage characteristics of Separator | | | Thermal stability of Battery | |
|---|---|---|---|---|---|
| Separator | Maximum thermal shrinkage (%) | | Maximum thermal shrinkage rate (MD/TD) | Time required for fire and explosion(av erage/minimum) (min.) | Thermal stability evaluation |
| | Vertical direction(TD) | Horizontal direction(MD) | | | |
| A | 26 | 22 | 0.85 | 14.9/13.G | Good |
| D | 6 | 5 | 0.83 | 15.7/14.1 | Good |

The maximum thermal shrinkage of all separators A and D in table 1 is equal to or below 30%. And ratio of maximum thermal shrinkage of the horizontal direction against the maximum thermal shrinkage of the vertical direction is 0.8 to 1.3 based on 2 significant digits. All the results represents excellent thermal stability under 150°C oven tests.

**Table 2**

| | Thermal shrinkage characteristics of Separator | | Thermal stability of Battery | | |
|---|---|---|---|---|---|
| Separator | Maximum thermal shrinkage (%) | | Maximum thermal shrinkage rate (MD/TD) | Time required for fire and explosion(average/minimum) (min.) | Thermal stability evaluation |
| | Vertical direction(TD) | Horizontal direction(MD) | | | |
| E | 31 | 27 | 0.87 | 16.4/12.9 | Acceptable |
| F | 31 | 23 | 0.74 | 13.1 / 12.5 | Bad |
| G | 26 | 13 | 0.50 | 14.3/12.1 | Bad |
| H | 15 | 4 | 0.27 | 13.0/11.5 | Bad |

The maximum thermal shrinkage of separators E,F,G and H in table 2 is over 30%, or ratio of maximum thermal shrinkage of the horizontal direction against the maximum thermal shrinkage of the vertical direction is out of the range 0.8 to 1.3. The results are inferior under 150°C oven tests compared comparing to the results in Table 1.

For separator E, the average time required for a fire or an explosion is good, however the thermal stability is not excellent because the minimum time is short comparing to the results in Table 1. Although the maximum thermal shrinkage of separator E is very high with 31% in the vertical direction and 27% in the horizontal direction, it still shows a relatively high thermal stability because the ratio of thermal shrinkage is 0.9 which is within the requested range of the present invention. Therefore, the ratio of the thermal shrinkage is more important than the shrinkage along a single direction regarding the effect on thermal stability.

Regarding the ratio of thermal shrinkage, the separators having the ratio of the maximum thermal shrinkage of horizontal direction against vertical direction ranging 0.8 to 1.1 (approximately equal to or less than 1) tend to have better thermal characteristics than the separators having the ratio range of 1.1 to 1.3.

Additionally, a key to identify the thermal stability of separator is not a material of the separator itself, but the thermal shrinkage and the melting point. The present invention especially relates to the thermal shrinkage. When other polyolefins, for example polypropylene fine porosity sheet which has similar characteristics with polyethylene sheet used in the exemplary tests, is used, a similar effect can be realized.

According to the present invention, thermal stability of battery can be raised by defining the maximum shrinkage ratio of the horizontal direction against the vertical direction, and the maximum shrinkage of both vertical direction and horizontal direction of the separator.

According to the present invention, lithium-ion batteries with an improved thermal stability than the conventional lithium batteries can be obtained by employing separator having the maximum thermal shrinkage at a predetermined range, without any particular limitation in other characteristics of the separator.

## Claims

1. A separator for a lithium rechargeable battery wherein the maximum thermal shrinkages of vertical direction (TD) and horizontal direction (MD) are 0 to 30%, and wherein the ratio of the maximum thermal shrinkage of the horizontal direction against the maximum thermal shrinkage of the vertical direction is 0.8 to 1.1.

2. A separator for a lithium rechargeable battery as claimed in claim 1, wherein the separator is composed of a porous film of polyethylene or polypropylene.

3. A lithium rechargeable battery, comprising:
an electrode assembly including a positive electrode, a negative electrode, and a separator which is interposed between the positive electrode and the negative electrode;
an electrolyte;
a case receiving the electrode assembly and the electrolyte; and
a separator according to claim 1 or 2.

4. The lithium rechargeable battery as claimed in claim 3, wherein the positive electrode includes an aluminum assembly and a positive electrode active material layer, and the positive electrode active material layer comprises lithium cobalt oxide, carbon black and polyvinylidene fluoride.

5. The lithium rechargeable battery as claimed in claim 3 or 4, wherein the negative electrode includes a copper assembly and a negative electrode active material layer, and the negative electrode active material layer comprises Mesocarbon micro bead (MCMB) and polyvinylidene fluoride.

6. The lithium rechargeable battery as claimed in claim 3, 4 or 5, wherein the electrolyte is a solvent of 1.15M concentration having LiPF₆ dissolved by lithium salts in a solvent which has rate of ethylene carbonate: propylene carbonate: dimethyl carbonate of 3: 4: 1.

7. The lithium rechargeable battery as claimed in any one of claims 3 to 6, wherein the electrode assembly comprises a jellyroll type assembly, wherein the positive electrode, the negative electrode and the separator are stacked and wound.

## Patentansprüche

1. Separator für wiederaufladbare Lithiumbatterie, wobei die maximale thermische Schrumpfung in vertikaler Richtung (TD) und in horizontaler Richtung (MD) 0 bis 30% beträgt und das Verhältnis von maximaler thermischer Schrumpfung in horizontaler Richtung zu maximaler thermischer Schrumpfung in vertikaler Richtung 0,8 bis 1,1 beträgt.

2. Separator für wiederaufladbare Lithiumbatterie nach Anspruch 1, wobei der Separator aus einer porösen Folie aus Polyethylen oder Polypropylen besteht.

3. Wiederaufladbare Lithiumbatterie, umfassend:
eine Elektrodenbaugruppe mit einer positiven Elektrode, einer negativen Elektrode und einem Separator, der zwischen die positive Elektrode und die negative Elektrode eingeschoben ist;
einen Elektrolyt;
ein Behältnis, das die Elektrodenbaugruppe und den Elektrolyt aufnimmt; und
einen Separator nach Anspruch 1 oder 2.

4. Wiederaufladbare Lithiumbatterie nach Anspruch 3, wobei zu der positiven Elektrode eine Aluminium-Baugruppe und eine Schicht aus aktivem Material für die positive Elektrode gehört und die Schicht aus aktivem Material für die positive Elektrode Lithiumcobaltoxid, Ruß und Polyvinylidenfluorid umfasst.

5. Wiederaufladbare Lithiumbatterie nach Anspruch 3 oder 4, wobei zu der negativen Elektrode eine Kupferbaugruppe und eine Schicht aus aktivem Material für die negative Elektrode gehört und die Schicht aus aktivem Material für die negative Elektrode Mesocarbon-Microbeads (MCMB) und Polyvinylidenfluorid umfasst.

6. Wiederaufladbare Lithiumbatterie nach Anspruch 3, 4 oder 5, wobei der Elektrolyt ein Lösungsmittel mit einer 1,15 M-Konzentration an LiPF₆ ist, gelöst durch Lithiumsalze in einem Lösungsmittel, das ein Verhältnis von Ethylencarbonat/Propylencarbonat/Dimethylcarbonat von 3:4:1 aufweist.

7. Wiederaufladbare Lithiumbatterie nach einem der Ansprüche 3 bis 6, wobei die Elektrodenbaugruppe eine Baugruppe von der Art einer Biskuitrolle umfasst, wobei die positive Elektrode, die negative Elektrode und der Separator gestapelt und gewickelt sind.

## Revendications

1. Séparateur pour batterie rechargeable au lithium, dans lequel les rétrécissements thermiques maximaux en direction verticale (TD) et en direction horizontale (MD) sont de 0 à 30%, et dans lequel le ratio du rétrécissement thermique maximal de la direction horizontale rapporté au rétrécissement thermique maximal de la direction verticale est de 0,8 à 1,1.

2. Séparateur pour batterie rechargeable au lithium selon la revendication 1, dans lequel le séparateur est composé d'un film poreux de polyéthylène ou de polypropylène.

3. Batterie rechargeable au lithium, comprenant :
un ensemble d'électrodes comportant une électrode positive, une électrode négative et un séparateur qui est interposé entre l'électrode positive et l'électrode négative ;
un électrolyte ;
un boîtier recevant l'ensemble d'électrodes et l'électrolyte ; et
un séparateur selon la revendication 1 ou 2.

4. Batterie rechargeable au lithium selon la revendication 3, dans laquelle l'électrode positive comporte un assemblage en aluminium et une couche de matériau actif de l'électrode positive, et la couche de matériau actif de l'électrode positive comprend de l'oxyde de lithium-cobalt, du noir de carbone et du polyfluorure de vinylidène.

5. Batterie rechargeable au lithium selon la revendication 3, 4, dans laquelle l'électrode négative comporte un assemblage de cuivre et une couche de matériau actif de l'électrode négative, et la couche de matériau actif de l'électrode négative comprend une microbille de mésocarbone (MCMB) et du polyfluorure de vinylidène.

6. Batterie rechargeable au lithium selon la revendication 3, 4, ou 5, dans laquelle l'électrolyte est un solvant d'une concentration de 1,15 M ayant du LiPF₆ dissous par des sels de lithium dans un solvant qui a un taux de carbonate d'éthylène : carbonate de propylène : carbonate de diméthyle de 3: 4: 1.

7. Batterie rechargeable au lithium selon l'une quelconque des revendications 3 à 6, dans laquelle l'ensemble d'électrodes comprend un ensemble du type roulé, où l'électrode positive, l'électrode négative et le séparateur sont empilés et enroulés.
